# EUROPÄISCHE PATENTANMELDUNG

(11) **EP 4 814 998 A1**
(43) Veröffentlichungstag der Anmeldung: **30.09.2026**
(21) Anmeldenummer: 25167055.0
(22) Anmeldetag: 28.03.2025
(51) Int. Cl.: H01F 27/02, H01F 27/08, F03D 80/80, F03D 80/60

(54) **WINDENERGIEANLAGE UND WINDENERGIEANLAGEN-DROSSEL**

(71) Anmelder: Wobben Properties GmbH, 26607 Aurich (DE)
(72) Erfinder: Campen, Günter, 26639 Wiesmoor (DE); Junker-Wulf, Jürgen, 26624 Südbrockmeerland (DE)
(74) Vertreter: Eisenführ Speiser

(57) **Zusammenfassung**

Es wird eine Windenergieanlage (100) mit einer Gondel (104), in welcher ein Wechselrichter (300) und eine Netzdrossel (400) vorgesehen sind, welche mit einem Ausgang des Wechselrichters (300) gekoppelt sind, vorgesehen. Die Netzdrossel (400) weist drei Drosselspulen (410) und ein Joch (430) auf, wobei das Joch (430) ein Jochunterteil (431) und ein Jochoberteil (432) aufweist. Jede Drosselspule (410) weist eine erste und zweite Stirnseite (410a, 410b) sowie ein Kernpaket (411) dazwischen auf. Jede Drosselspule (410) weist eine erste Wasserkühleinheit (440, 441 - 444) auf, welche mit ihrem ersten Ende an einem Ende (411b) des Kernpakets (411) anliegt. Ein zweites Ende der Wasserkühleinheit (440) dient als Wicklungskontaktfläche und ist abgerundet oder gekrümmt ausgestaltet. Jede Drosselspule (410) weist mindestens eine weitere Wasserkühleinheit auf, welche ein erstes gerades Ende und ein zweites gekrümmtes oder abgerundetes Ende als Wicklungskontaktfläche aufweist, wobei diese Wasserkühleinheit zwischen zwei Wickelabschnitten angeordnet ist.

## Beschreibung

Die vorliegende Erfindung betrifft eine Windenergieanlage und eine Windenergieanlagen-Drossel.

Eine Windenergieanlage weist einen aerodynamischen Rotor mit Rotorblättern auf, der direkt oder indirekt mechanisch mit einem elektrischen Generator gekoppelt ist. Eine Drehbewegung des aerodynamischen Rotors versetzt somit den Generator in eine Drehbewegung, so dass elektrische Energie erzeugt wird. Der Generator ist mir einer maschinenseitigen Drossel (Maschinendrossel) gekoppelt. Die maschinenseitige Drossel ist mit einem Wechselrichter gekoppelt und ist damit zwischen dem Generator und dem Wechselrichter angeordnet. Am Ausgang des Wechselrichters ist eine Netzdrossel (d.h. eine netzseitige Drossel) vorgesehen. Über einen Netzausgangsanschluss ist die Windenergieanlage ist mit einem Versorgungsnetz gekoppelt ist.

Insbesondere bei Windenergieanlagen, welche Wechselrichter aufweisen, kann eine netzseitige Drossel zwischen dem Wechselrichter und dem Versorgungsnetz vorgesehen werden. Bei einer Windenergieanlage mit einem dreiphasigen System wird typischerweise für jede Phase eine Drossel verwendet oder es wird eine 3-Phasen-Drossel verwendet. Die drei Drosseln eines dreiphasigen Systems können zu einer dreiphasigen Drossel zusammengefasst werden. Hierfür kann ein aus gestapelten Elektroblechen zusammengesetzter Kern vorgesehen werden. Solche Drosseln heizen sich im Betrieb auf und erreichen für den Einsatz kritische Temperaturen. Dies kann insbesondere den Wirkungsgrad und die Lebensdauer der Drossel minimieren.

Die Kühlung der maschinenseitigen Drossel spielt daher eine essenzielle Rolle, da der Betrieb der Drossel mit erheblichen Verlusten in Form von Wärme einhergeht. Diese Wärmeverluste entstehen sowohl durch Kupferverluste in den Wicklungen als auch durch Kernverluste im magnetischen Material, nämlich den Elektroblechen, die zusammen ein Kernpaket ausbilden. Wenn die entstehende Wärme nicht effektiv abgeführt wird, können Überhitzungen auftreten, die die elektrischen und mechanischen Eigenschaften der Drossel beeinträchtigen und ihre Lebensdauer erheblich verkürzen.

In einer Windenergieanlage ist die Herausforderung der Kühlung besonders ausgeprägt, da die maschinenseitige Drossel z. B. in der Gondel der Windenergieanlage installiert sein kann. Hier sind die Platzverhältnisse begrenzt, und die Umgebungstemperatur kann durch die Abwärme anderer Komponenten, wie des Generators und des Umrichters, bereits erhöht sein. Ein effektives Kühlsystem muss daher kompakt sein und gleichzeitig eine hohe Wärmeabfuhrleistung bieten.

Passive Kühlsysteme, wie natürliche Konvektion, können in manchen Fällen ausreichend sein, erfordern jedoch eine sorgfältige Gestaltung der Drossel zur Maximierung der Wärmeabstrahlung. In Anwendungen mit höheren thermischen Anforderungen sind aktive Kühlsysteme erforderlich, beispielsweise durch forcierte Luftkühlung mittels Lüftern oder Flüssigkeitskühlung. Diese Systeme müssen jedoch so ausgelegt sein, dass sie den Energieverbrauch der Windenergieanlage nicht signifikant erhöhen.

Die Kühlung muss zudem den mechanischen Belastungen und Umwelteinflüssen standhalten, die in einer Gondel typisch sind. Die starken Vibrationen und Lastwechsel während des Betriebs erfordern eine robuste Bauweise, während korrosive Umgebungen, insbesondere bei Offshore-Anlagen, den Einsatz widerstandsfähiger Materialien und effektiver Abdichtungen erfordern.

Schließlich ist eine gleichmäßige Wärmeverteilung innerhalb der maschinenseitige Drossel entscheidend, um thermische Spannungen und Hotspots zu vermeiden. Dies trägt dazu bei, die Zuverlässigkeit der Drossel zu erhöhen und ihre Wartungsintervalle zu verlängern. Wartungsfreundlichkeit ist ein weiterer wichtiger Faktor, da die Gondel einer Windenergieanlage oft schwer zugänglich ist.

Es ist daher eine Aufgabe der Erfindung, eine Windenergieanlage und eine maschinenseitige Drossel vorzusehen, die eine Kühlung einer maschinenseitigen Drossel in einer Windenergieanlage verbessert und die Verlustleistung reduzieren kann.

Die Aufgabe wird durch eine Windenergieanlage nach Anspruch 1 sowie durch eine Windenergieanlagen-maschinenseitige Drossel nach Anspruch 4 gelöst.

Somit wird eine Windenergieanlage mit einer Gondel vorgesehen. In der Gondel sind ein elektrischer Generator und eine maschinenseitige Drossel vorgesehen. Die maschinenseitige Drossel weist mindestens drei Drosselspulen jeweils mit einer Luftkühlung auf. Die Luftkühlung weist Kühleinheiten auf, welche jeweils ein Ende aufweisen, welche an einem Kernpaket der Drosselspule anliegen können und an ihrem gegenüberliegenden Ende von einer Wicklung umgeben sein können. Eine Drosselspule kann ein Kernpaket, Aluminiumwicklungen und eine Luftkühlung aufweisen.

Ferner kann mit der verbesserten Kühlung die Güte der Elektrobleche des Jochpaketes reduziert werden, ohne dass dabei die Temperaturen in der Drosselspule einen Grenzwert überschreiten. Die verminderte Güte der Elektrobleche führt zu reduzierten Kosten.

Damit kann durch Verbesserung der Kühlleistung eine kostengünstige Drossel maschinenseitig erhalten werden.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage,
- Fig. 2: zeigt ein schematisches Schaltbild einer Netzschaltung einer Windenergieanlage,
- Fig.3: zeigt eine schematische Schnittansicht einer maschinenseitigen Drossel,
- Fig. 4: zeigt eine schematische Teilexplosionsansicht sowie eine schematische Schnittansicht einer Netzdrossel,
- Fig. 5: zeigt eine schematische Schnittansicht einer Netzdrossel,
- Fig. 6A bis 6C: zeigen verschiedene Ansichten einer Kühleinheit,
- Fig. 7A bis 7C: zeigen verschiedene Ansichten einer weiteren Kühleinheit,
- Fig. 8A bis 8C: zeigen verschiedene Ansichten einer weiteren Kühleinheit, und
- Fig. 9: zeigt einen Leistungsschrank.

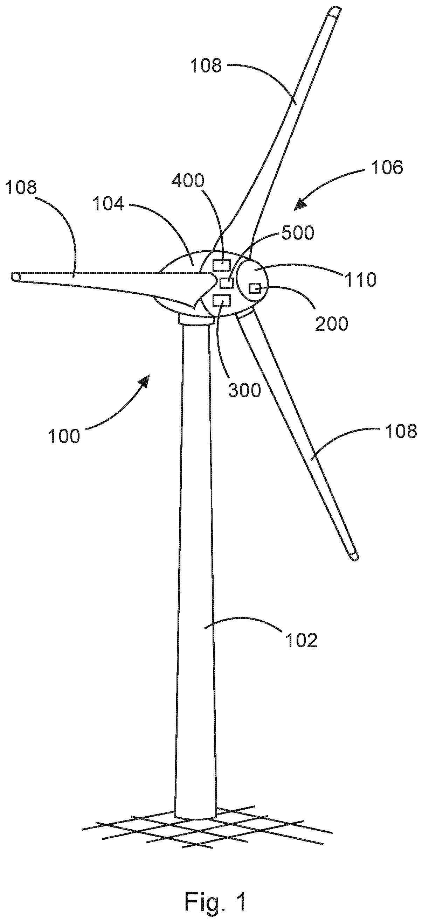

Fig. 1 zeigt eine schematische Darstellung einer Windenergieanlage. In Fig. 1 ist eine Windenergieanlage 100 mit einem Turm 102, einer Gondel 104 und einem aerodynamischen Rotor 106 gezeigt. Der aerodynamische Rotor 106 weist drei Rotorblätter 108 auf. Ferner weist die Windenergieanlage 100 einen Spinner 110 auf. Der aerodynamische Rotor 106 ist direkt oder indirekt mit einem elektrischen Generator 200 gekoppelt und versetzt ihn in eine Drehbewegung. Durch die Drehbewegung erzeugt der elektrische Generator 200 Energie, welche einem Wechselrichter 300 zugeführt wird. Am Ausgang des Wechselrichters kann eine Netzdrossel 400 vorgesehen sein. Die Netzdrossel 400 kann in einem Leistungsschrank in der Gondel angeordnet sein. Die Netzdrossel 400 kann über ein Fluid-Kühlsystem gekühlt werden. Ferner ist eine maschinenseitige Drossel 500 vorgesehen.

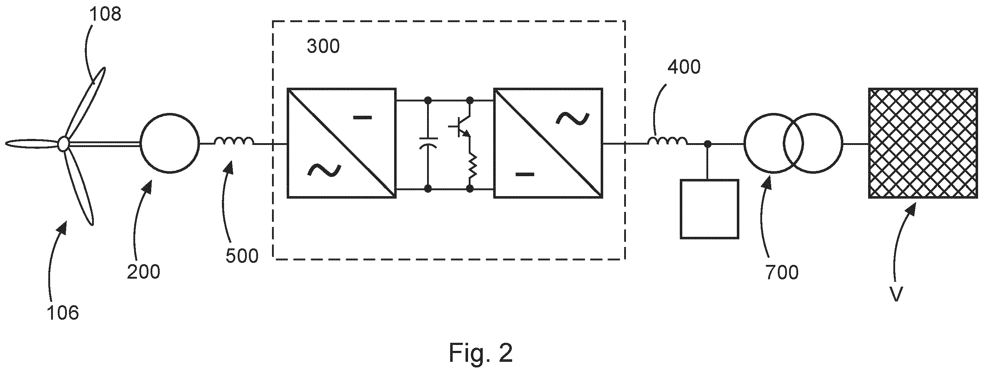

Fig. 2 zeigt ein schematisches Schaltbild einer Netzschaltung einer Windenergieanlage 100. Ein aerodynamischer Rotor 106 mit Rotorblättern 108 ist direkt oder indirekt mit einem elektrischen Generator 200 gekoppelt. Eine Drehbewegung des aerodynamischen Rotors 106 versetzt den Generator 200 in eine Drehbewegung, so dass elektrische Energie erzeugt wird. Der Generator 200 ist mir einer maschinenseitigen Drossel 500 gekoppelt. Die maschinenseitige Drossel 500 ist mit einem Wechselrichter 300 gekoppelt. Die maschinenseitige Drossel 500 ist somit zwischen dem Generator 200 und dem Wechselrichter 300 angeordnet. Am Ausgang des Wechselrichters 300 ist eine Netzdrossel 400 (d.h. eine netzseitige Drossel) vorgesehen. Über einen Netzausgangsanschluss 700 ist die Windenergieanlage 100 ist mit einem Versorgungsnetz V gekoppelt ist.

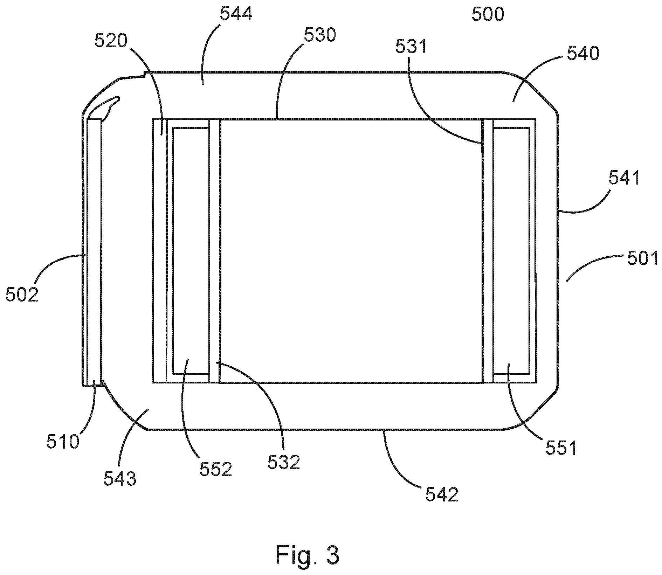

Fig. 3 zeigt eine schematische Schnittansicht einer maschinenseitigen Drossel. Die maschinenseitige Drossel 500 weist ein erstes und ein zweites Ende 501, 502, zwei Anschlussschienen 510, 520, ein Kernpaket 530 und eine Wicklung 540 sowie Kühlelemente 550 auf. Das Kernpaket 530 weist eine erste und zweite Stirnseite 531, 532 auf. An der ersten und zweiten Stirnseite 531, 532 ist jeweils ein Luftführungskanal 551, 552 vorgesehen, durch welchen Luft zur Kühlung geführt wird. An der zweiten Stirnseite 532 schließt sich der zweite Luftführungskanal 552 und eine zweite Anschlussschiene 520 an. Um das Kernpaket 530 sowie um die Luftführungskanäle 551, 552 und um die zweite Anschlussschiene 510 herum werden die Wicklungen 540 vorgesehen. Die Wicklungen 540 weisen somit vier verschiedene Bereiche, nämlich einen ersten Bereich 541 im Bereich der ersten Stirnseite 531 des Kernpakets 530, einen zweiten Bereich 542 an einer Längsseite des Kernpakets 530, einen dritten Abschnitt 534 zwischen den beiden Anschlussschienen 510, 520 und einen vierten Abschnitt 544 an der zweiten Längsseite des Kernpakets 530 auf. Die Wicklungen 540 umschließen somit das Kernpaket 530, einen Luftführungskanal 550 und eine zweite Anschlussschiene 520.

Der erste Luftführungskanal 551 liegt an einer Seite an der ersten Stirnseite 531 an und ist an seiner gegenüberliegenden Seite mit dem ersten Wickelbereich umwickelt.

Der zweite Luftführungskanal 552 ist zwischen der zweiten Stirnseite 532 und der zweiten Anschlussschiene 520 vorgesehen.

Somit wird eine maschinenseitige Drossel mit einer Luftkühlung vorgesehen, welche die in dem Kernpaket und in den Wicklungen entstehende Verlustwärme abführt.

Das Kühlsystem weist mindestens einen Lüfter auf, welcher einen Luftstrom erzeugt, der durch die Luftkanäle fließen kann und damit zu einer Kühlung der Luftkanäle führt. Die Kühlung der Luftkanäle führt dann ebenfalls zu einer Kühlung des Kernpakets sowie der Wicklungen.

Die maschinenseitige Drossel kann ein Joch mit einem Jochoberteil und einem Jochunterteil ohne Kühlkörper aufweisen. Die Kühlung der Drossel erfolgt damit lediglich über die Luftführungskanäle, welche an dem Kernpaket anliegen.

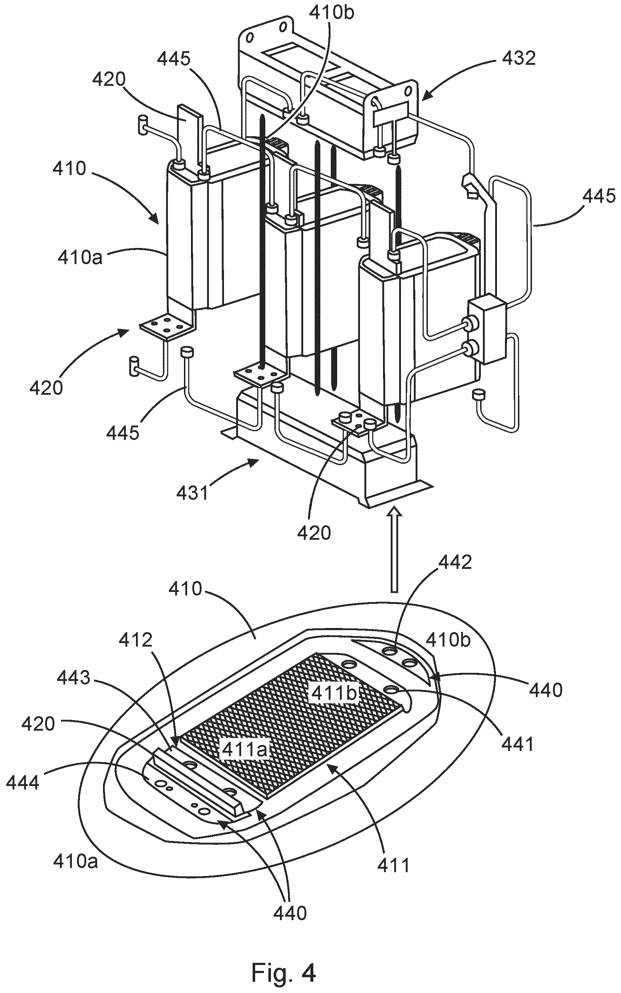

Fig. 4 zeigt eine schematische Teil-Explosionsansicht sowie eine schematische Schnittansicht einer Netzdrossel.

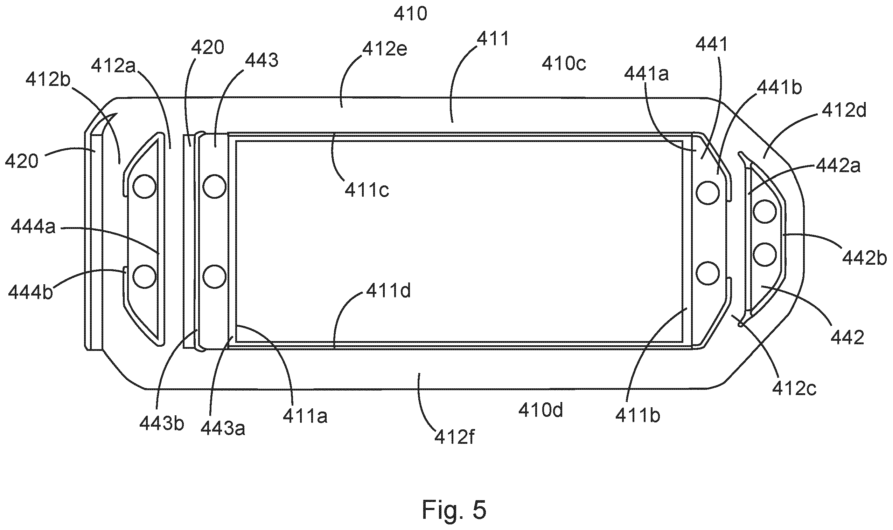

Fig. 5 zeigt eine schematische Schnittansicht einer Netzdrossel. Die Netzdrossel 400 weist mindestens eine Drosselspule 410 mit einer ersten und zweiten Stirnseite 410a, 410b und ein Joch 430 mit einem Jochunterteil 431 und einem Jochüberteil 432 auf. Ferner sind jeder Drosselspule 410 zwei Anschlussschienen 420 zugeordnet. Die Drosselspule 410 weist ein Kernpaket 411 mit einem ersten und zweiten Ende 411a, 411b und einer Mehrzahl von Elektroblechen, Wicklungen 412 sowie eine Wasserkühlung 440 auf. Die Wasserkühlungen 440 der jeweiligen Drosselspulen 410 können über Wasserleitungen 445 verbunden sein. Jede Drosselspule 410 weist ein Kernpaket 411 sowie eine Mehrzahl von Wicklungen 412 auf. Die Wicklungen 412 sind um das Kernpaket 411 herum gewickelt. Zusätzlich dazu sind Anschlussschienen 420 vorgesehen, welche ebenfalls zumindest teilweise durch die Wicklungen 412 umwickelt ist.

Des Weiteren ist eine Wasserkühlung 440 mit z. B. vier Wasserkühleinheiten 441, 442, 443, 444 vorgesehen. Die Kühleinheiten 441 - 444 sind an den Stirnseiten 410a, 410b der Drosselspule 410 vorgesehen. Das Kernpaket 411 weist ein erstes und zweites Ende 411a, 411b sowie zwei Längsseiten 411c, 411d auf. Die Längsseiten 411c, 411d stellen Wicklungskontaktflächen dar, die nicht mittels einer Wasserkühleinheit gekühlt werden. Dadurch kann eine Drosselspule mit geringem Baumaß erreicht werden.

An dem ersten Kernpaket-Ende 411a ist eine erste Wasserkühlungseinheit 443 vorgesehen. In Richtung der Stirnseite 410a schließt sich die Anschlussschiene 420 an, welche durch einen ersten Wickelabschnitt 412a umwickelt ist. An den ersten Wickelabschnitt 412a schließt sich eine zweite Wasserkühlungseinheit 444 an. Die Wasserkühlungseinheit 444 weist ein erstes und zweites Ende 444a, 444b auf. Das erste Ende 444a schließt sich an den ersten Wickelabschnitt 412a an. Das zweite Ende 444b wird durch einen zweiten Wickelabschnitt 412b umgeben. Das zweite Ende 444b ist abgerundet ausgestaltet.

An dem zweiten Ende 411b des Kernpakets 411 schließt sich eine dritte Wasserkühleinheit 441 an, welche ein erstes und zweites Ende 441a, 441b aufweist. Das erste Ende 441a schließt sich an das zweite Kernpaket-Ende 411b an und kann optional gerade ausgestaltet sein. Das zweite Ende 441b ist gegenüber dem ersten Ende 441a angeordnet und kann zumindest teilweise abgerundet ausgestaltet sein.

An dem zweiten Ende 441b schließt ein dritter Wickelabschnitt 412c an. An den dritten Wickelabschnitt 412c schließt sich eine vierte Wasserkühlungseinheit 442 an. Die Wasserkühlungseinheit 442 weist ein erstes und zweites Ende 442a, 442b auf. Das zweite Ende 442b kann abgerundet ausgestaltet sein. An dem zweiten Ende 442b kann ein vierter Wickelabschnitt 412d vorgesehen sein.

Die Drosselspule 410 weist eine erste und zweite Stirnseite 410a, 410b und eine erste und zweite Längsseite 410c, 410d auf. Die erste Kühleinheit 443 weist ein erstes und zweites Ende 443a, 443b auf. Das erste Ende 443a liegt an einem ersten Ende 441a des Blechpaketes 411 an. Das zweite Ende 443b liegt an der Schiene 420 an. Die erste Wasserkühleinheit 443 erstreckst sich somit zwischen einem ersten Ende 441a des Kernpaktes 411 und einer der beiden Stromschienen 420. Das erste Ende 441a stellt eine Kernpaket-Kontaktfläche dar. Das zweite Ende 443b stellt eine Stromschienen-Kontaktfläche dar. Zwischen der Stromschiene 420 und einer zweiten Kühleinheit 444 ist ein erster Wickelabschnitt 412a vorgesehen. Die zweite Kühleinheit 444 weist ein erstes und zweites Ende 444a, 444b auf. Das erste Ende 444a kann im Wesentlichen gerade ausgestaltet sein. Das zweite Ende 444b ist als eine Wickelkontaktfläche ausgestaltet und ist zumindest teilweise abgerundet oder gekrümmt ausgestaltet. Durch diese Ausgestaltung der zweiten Seite 444b wird die Wicklungskontaktfläche vergrößert, so dass eine verbesserte Wärmeübertragung ermöglicht wird. Aufgrund der abgerundeten Ausgestaltung können die Wicklungen verbessert um die zweite Kühleinheit und insbesondere um das zweite Ende 444b der Kühleinheit gewickelt werden.

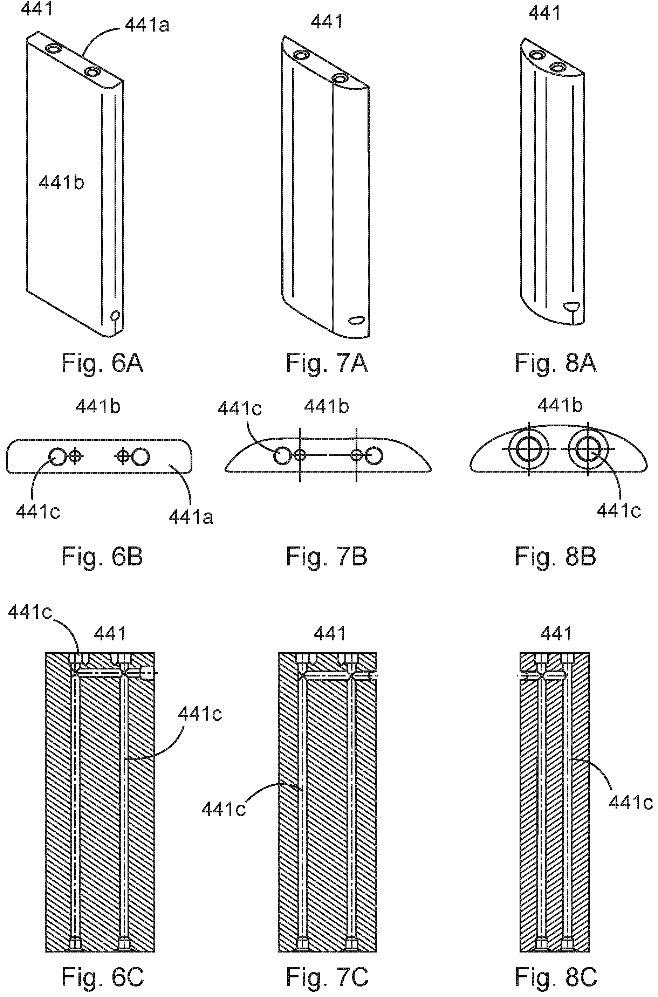

Fig. 6A bis 6C zeigen verschiedene Ansichten einer Kühleinheit.

Fig. 7A bis 7C zeigen verschiedene Ansichten einer weiteren Kühleinheit.

Fig. 8A bis 8C zeigen verschiedene Ansichten einer weiteren Kühleinheit. In den Figuren 5A bis 7C sind drei verschiedene Ausführungsformen einer Wasserkühlungseinheit dargestellt. Die Wasserkühlungseinheiten gemäß den Figuren 6A bis 8C unterscheiden sich durch die Ausgestaltung ihres zweiten Endes und insbesondere durch die Ausgestaltung der Krümmung des zweiten Endes, d. h. der Wickelungskontaktfläche.

Die Kühleinheiten 441 weisen eine erste und zweite Seite 441a, 441b auf. Optional kann die erste Seite 441a gerade ausgestaltet sein und die zweite Seite 441b kann gekrümmt oder abgerundet ausgestaltet sein. In den Figuren 6A bis 8C sind verschiedene Kühleinheiten mit unterschiedlich abgerundeten Ecken dargestellt.

Die Kühleinheiten 441 weisen mindestens zwei Durchgangsbohrungen 441c auf, durch welche ein Kühlmittel fließen kann.

Die Kühleinheiten 441 können aus Metall hergestellt sein. Insbesondere können die Kühleinheiten aus einem Stück gefräst werden, wobei die Durchgangsbohrungen dann entsprechend vorgesehen werden müssen. Alternativ dazu können die Kühleinheiten aus Blechen mit Rohren 441c hergestellt werden.

Der Radius der Krümmung der Kühleinheiten kann z. B. 8 - 12 mm, insbesondere 10 mm, betragen, oder die Krümmung kann mehrere Krümmungsabschnitte z. B. mit einer Krümmung von 8 - 15 mm, insbesondere 12 mm, und einer Krümmung von 40 - 60 mm, insbesondere 50 mm, aufweisen.

Durch die verbesserte Kühlung der Netzdrossel können Elektrobleche für Kernpakete mit einer reduzierten Güte verwendet werden. Eine erhöhte Güte wird nicht benötigt, da die Kühlung ausreicht, um genügend Wärme aus dem Kernpaket abzuführen.

Im Stand der Technik kann z.B. das Elektroblech 2 verwendet werden. Durch den erfindungsgemäßen Aufbau kann jedoch ein Elektroblech 1 mit geringerer Güte verwendet werden, da der erfindungsgemäße Aufbau dazu in der Lage ist, eine verbesserte Kühlleistung zu gewährleisten. Das Elektroblech 2 ist z. B. Power Core^{®} M250-35A von ThyssenKrupp Steel. Das Elektroblech 1 ist z. B. powercore^{®}traction 027-140Y420 von ThyssenKrupp Steel mit einer Vergleichsgüte von NO27-14 nach DIN EN 10303.

In der Tabelle 1

| Frequenz | Elektroblech 1 | Elektroblech 2 |
|---|---|---|
| 50 Hz | 0,93 W / Kg | 1,12 W / Kg |
| 200 Hz | 5,15 W / Kg | 5,99 W / Kg |
| 400 HZ | 13,29 W/ Kg | 16,91 W / Kg |
| 1000 Hz | 52,89 W / Kg | 72,36 W / Kg |

Die Drosselspule weist ein Kernpaket, Aluminiumwicklungen und eine Wasserkühlung auf, welche beispielsweise vier Einheiten aufweisen kann. In der Wicklung kann eine erste und zweite Anschlussschiene für die beiden Anschlüsse der Drosselspule eingewickelt sein. Zwischen der Anschlussschiene und dem Kernpaket kann eine erste Kühleinheit vorgesehen sein. An einem anderen Ende des Kernpaketes, d. h. einer Stirnseite, kann eine zweite Kühleinheit mit einem zumindest teilweise abgerundeten oder gekrümmten Ende vorgesehen sein. An einer Seite der Stromschiene kann eine dritte Kühleinheit vorgesehen sein, welche an ihren freien Enden zumindest teilweise abgerundet oder gekrümmt ausgestaltet ist. Die zweite Kühleinheit kann mittels der Wicklung umwickelt sein. An der Wicklung kann eine vierte Kühleinheit vorgesehen sein, welche ebenfalls zumindest teilweise mittels der Wicklung umwickelt sein kann. Die vierte Kühleinheit weist ein Ende auf, welches zumindest teilweise abgerundet ist.

Die abgerundeten oder gekrümmten Enden der Kühleinheiten, welche wiederum durch die Aluminiumwicklung umwickelt werden, sind abgeflacht ausgestaltet, so dass damit ein besserer Wärmeübertrag von den Kühleinheiten auf die Wicklungen möglich ist. Insbesondere kann dadurch vermieden werden, dass ein Luftspalt zwischen den Kühleinheiten und den Aluminiumwicklungen vorhanden ist. Damit kann ein besserer Wärmeübergang erreicht werden, wodurch die Gesamtkühlung verbessert werden kann.

Gemäß der Erfindung wird die Wärmeableitung der Netzdrossel verbessert, indem die Wasserkühleinheiten an ihrem einen Ende zumindest teilweise gekrümmt oder abgerundet ausgestaltet sind. Dadurch lassen sich die Wicklungen besser um die Wasserkühleinheiten herumlegen, wodurch insbesondere eine Wicklung der Wicklungen um die Wasserkühlung herum verbessert werden kann. Insbesondere können dadurch Lufteinschlüsse reduziert werden, so dass die Wärmeleitung von der Kühleinheit über die Wicklungen nach außen verbessert werden kann. Mit den Wasserkühleinheiten kann die freigesetzte Wärme an den Orten aufgenommen werden, welche möglichst nah an den Wicklungen sind.

Die Wasserkühleinheiten weisen jeweils eine Wicklungskontaktfläche auf, welche durch die Ausgestaltung des zweiten Endes, nämlich das Abrunden bzw. die Krümmung des zweiten Endes, vergrößert werden kann. Damit kann ein Wärmeübergang zwischen der Wicklung und dem Kühlkörper vergrößert werden.

Durch das Vorsehen der Kühleinheiten an der Stirnfläche der Drosselspulen und durch die abgerundete oder gekrümmte Ausgestaltung der Wicklungskontaktflächen der Kühleinheiten kann die Kühlleistung so gesteigert werden, dass auf eine Kühlung des Joches verzichtet werden kann.

Ferner kann mit der verbesserten Kühlung die Güte der Elektrobleche des Kernpaketes reduziert werden, ohne dass dabei die Temperaturen in der Drosselspule einen Grenzwert überschreiten. Die verminderte Güte der Elektrobleche führt zu reduzierten Kosten.

Damit kann durch Verbesserung der Kühlleistung eine kostengünstige Netzdrossel erhalten werden.

Durch den Wegfall der Kühlung des Joches kann die für den Betrieb der Jochkühlung verwendete elektrische Leistung eingespart werden.

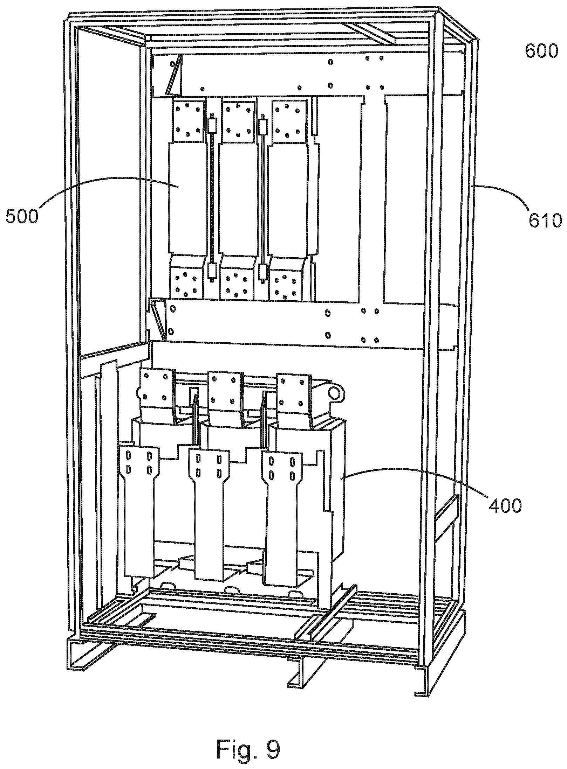

Fig. 9 zeigt einen Leistungsschrank. Der Leistungsschrank 600 kann innerhalb der Gondel von Fig. 1 angeordnet sein. Der Leistungsschrank 600 kann als ein Rahmen 610 ausgestaltet sein. Leistungsschrank 600 weist eine Netzdrossel (netzseitige Drossel) 400 und eine maschinenseitige Drossel 500 auf, welche übereinander in dem Rahmen 610 angeordnet sind. Die Netzdrossel 400 kann hierbei unterhalb der maschinenseitigen Drossel 500 angeordnet sein. Durch die oben beschriebene verbesserte Kühlung der Netzdrossel 400 kann die Kühlung der oben angeordneten maschinenseitigen Drossel 500 kleiner oder mit reduzierter Leistung ausgelegt werden, da von der untern angeordneten Netzdrossel weniger Wärme erzeugt wird, welche zur Erwärmung die maschinenseitige Drossel führt, auch wenn die maschinenseitige Drossel nicht betrieben wird. Da sich die thermischen Gegebenheiten in der Gondel durch die Verwendung der oben beschriebenen Netzdrossel ändern, kann dies beim Design der maschinenseitigen Drossel berücksichtigt werden.

Bei der Auslegung der maschinenseitigen Drossel muss somit auch die Auslegung der Netzdrossel und weitere Wärme erzeugende Komponenten in der Gondel mitberücksichtigt werden.

Bei der Frage der Effizienz der Kühlung der maschinenseitigen Drossel muss auch die elektrische Leistung der Lüfter für die Luftkühlung mitberücksichtigt werden. Die Verlustleistung der Luftkühlung kann zwischen 1kW und 2kW (z.B. 1,65kW) betragen. Die Temperatur in Inneren der Spule kann z.B. < 100° betragen.

### Bezugszeichenliste

- 100: Windenergieanlage
- 102: Turm
- 104: Gondel
- 106: Rotor
- 108: Rotorblätter
- 110: Spinner
- 200: Generator
- 300: Wechselrichter
- 400: Netzdrossel
- 410: Drosselspule
- 410a: erste Stirnseite
- 410b: zweite Stirnseite
- 410c: erste Längsseite
- 410d: zweite Längsseite
- 411: Kernpaket
- 411a: erstes Ende
- 411b: zweites Ende
- 412: Wicklungen
- 412a: erster Wickelabschnitt
- 412b: zweiter Wickelabschnitt
- 412c: dritter Wickelabschnitt
- 412d: vierter Wickelabschnitt
- 420: Anschlussschienen
- 430: Joch
- 431: Jochunterteil
- 432: Jochüberteil
- 440: Wasserkühlung
- 441: Wasserkühleinheiten
- 441a: erstes Ende
- 441b: zweites Ende
- 441c: Durchgangsbohrungen
- 442: Wasserkühleinheit
- 442a: erstes Ende
- 442b: zweites Ende
- 443: Wasserkühleinheit
- 443a: erstes Ende
- 443b: zweites Ende
- 444: Wasserkühleinheit
- 444a: erstes Ende
- 444b: zweites Ende
- 445: Wasserleitungen
- 500: maschinenseitige Drossel
- 501: erstes Ende
- 502: zweites Ende
- 503: Elektroblech
- 510: erste Anschlussschiene
- 520: zweite Anschlussschiene
- 530: Kernpaket
- 531: erste Stirnseite
- 532: zweite Stirnseite
- 540: Wicklung
- 541: erster Wicklungsabschnitt
- 542: zweiter Wicklungsabschnitt
- 543: dritter Wicklungsabschnitt
- 544: vierter Wicklungsabschnitt
- 550: Luftführung
- 551: erster Luftführungskanal
- 552: zweiter Luftführungskanal

## Patentansprüche

1. Windenergieanlage (100), mit
einer Gondel (104), in welcher ein Wechselrichter (300), ein elektrischer Generator (200) und eine maschinenseitige Drossel (500) vorgesehen sind, wobei die maschinenseitige Drossel (500) zwischen dem elektrischen Generator (200) und dem Wechselrichter (300) angeordnet ist,
wobei die maschinenseitige Drossel (500) drei Drosselspulen aufweist, wobei jede Drosselspule (500) ein erstes und zweites Ende (501, 502), ein Kernpaket (530) dazwischen und eine Wicklung (540) aufweist,
wobei das Kernpaket (530) eine Mehrzahl von aufeinander gestapelten Elektroblechen (503) sowie eine erste und zweite Kernpaket-Stirnseite (531, 532) aufweist,
wobei jede Drosselspule der maschinenseitigen Drossel (500) eine Luftkühlungseinheit (550) aufweist,
wobei die Luftführungseinheit (550) jeweils einen ersten Luftführungskanal (551) an der ersten Kernpaket-Stirnseite (531) und einen zweiten Luftführungskanal (552) an der zweiten Kernpaket-Stirnseite (532) aufweist.

2. Windenergieanlage (100) nach Anspruch 1, ferner mit:
einer ersten und zweiten Anschlussschiene (510, 520),
wobei die zweite Anschlussschiene (520) an einer Seite des zweiten Luftführungskanals (552) anliegt.

3. Windenergieanlage (100) nach Anspruch 1 oder 2, wobei
die Wicklung (540) einen ersten Wicklungsbereich (541) an dem ersten Luftführungskanal (551), einen zweiten Wicklungsbereich (542) an einer Längsseite des Kernpakets (530), einen dritten Wicklungsbereich (543) zwischen der ersten und zweiten Anschlussschiene (510, 520) und einen vierten Wicklungsbereich (544) an der Längsseite des Kernpakets (530) aufweist.

4. Windenergieanlage (100) nach einem der Ansprüche 1 bis 3, ferner mit
einer Netzdrossel (400), welche mit einem Ausgang des Wechselrichters (300) gekoppelt ist,
wobei die Netzdrossel (400) drei Drosselspulen (410) und ein Joch (430) aufweist, wobei das Joch (430) ein Jochunterteil (431) und ein Jochoberteil (432) aufweist,
wobei jede Drosselspule (410) eine erste und zweite Stirnseite (410a, 410b) sowie ein Kernpaket (411) dazwischen aufweist,
wobei jede Drosselspule (410) eine erste Wasserkühleinheit (440, 441 - 444) aufweist, welche mit ihrem ersten Ende an einem Ende (411b) des Kernpakets (411) anliegt,
wobei ein zweites Ende der Wasserkühleinheit (440) als Wicklungskontaktfläche dient und abgerundet oder gekrümmt ausgestaltet ist,
wobei jede Drosselspule (410) mindestens eine weitere Wasserkühleinheit aufweist, welche ein erstes gerades Ende und ein zweites gekrümmtes oder abgerundetes Ende als Wicklungskontaktfläche aufweist, wobei diese Wasserkühleinheit zwischen zwei Wickelabschnitten angeordnet ist.

5. Windenergieanlage (100) nach Anspruch 4, wobei
die Wasserkühleinheiten (440, 441 - 444) jeweils zwei Wasserführungsabschnitte (441c) aufweisen, welche dazu geeignet sind, ein Kühlmedium der Wasserkühlung aufzunehmen.

6. Windenergieanlage (100) nach Anspruch 4 oder 5, ferner mit
einer ersten Wasserkühleinheit (443) mit einem ersten und zweiten Ende (443a, 443b), zwischen einem ersten Kernpaket-Ende (411a) und einer Stromschiene (420),
einer zweiten Wasserkühleinheit (444) mit einem ersten geraden Ende und einem zweiten abgerundeten oder gekrümmten Ende (444b), welches als Wicklungskontaktfläche dient,
wobei ein erster Wicklungsabschnitt (412a) zwischen der Stromschiene (412) und der zweiten Wasserkühleinheit (444) anliegt, wobei ein erstes Ende (444a) der zweiten Wasserkühleinheit (444) an dem ersten Wickelabschnitt (412a) anliegt,
wobei ein zweiter Wickelabschnitt (412b) um das zweite Ende (444b) der zweiten Wasserkühleinheit (444) herum gewickelt ist, so dass die Wicklungen (412) an der Wicklungskontaktoberfläche der zweiten Wasserkühleinheit (444) anliegen,
einer dritten Wasserkühleinheit (441), welche ein erstes und zweites Ende (441a, 441b) aufweist, welches als Wicklungskontaktfläche dient, wobei das erste Ende (441a) an dem zweiten Ende (411b) des Kernpakets anliegt und gerade ausgestaltet ist,
wobei das zweite Ende (441b) der dritten Wasserkühleinheit (441) gekrümmt oder abgerundet ausgestaltet ist und eine Wicklungskontaktfläche darstellt,
wobei ein dritter Wicklungsabschnitt (412c) um das zweite Ende (441b) gewickelt ist, so dass die Wicklungen an der Wicklungskontaktfläche anliegen,
einer vierten Wasserkühleinheit (442), welche ein erstes und zweites Ende (442a, 442b) aufweist, wobei das erste Ende (442a) gerade ausgestaltet ist und an dem dritten Wicklungsabschnitt (412c) anliegt,
wobei das zweite Ende (442b) der vierten Wasserkühlungseinheit (442) abgerundet oder gekrümmt ausgestaltet ist und eine Wicklungskontaktfläche darstellt,
wobei ein vierter Wicklungsabschnitt (412d) um das zweite Ende (442b) herum gewickelt ist, so dass die Wicklungen an der Wicklungskontaktoberfläche anliegen.

7. Maschinenseitige Drossel (500), mit
drei Drosselspulen,
wobei jede Drosselspule eine erste und zweite Seite (501, 502) sowie ein Kernpaket (530) dazwischen aufweist,
wobei jede Drosselspule einen ersten Luftführungskanal aufweist, welcher mit seinen ersten Enden an einer ersten Stirnseite (531) des Kernpakets (530) anliegt,
wobei ein zweites Ende eines ersten Luftführungskanals an einer Anschlussschiene anliegt,
wobei ein zweites Ende eines zweiten Luftführungskanals von einem Wicklungsabschnitt umgeben ist.

8. Windenergieanlagen-Leistungsschrank, mit
einer Netzdrossel mit drei Drosselspulen (410) und einem Joch (430), wobei das Joch (430) ein Jochunterteil (431) und ein Jochoberteil (432) aufweist,
wobei jede Drosselspule (410) eine erste und zweite Stirnseite (410a, 410b) sowie ein Kernpaket (411) dazwischen aufweist,
wobei jede Drosselspule (410) eine erste Wasserkühleinheit (440, 441 - 444) aufweist, welche mit ihrem ersten Ende an einem Ende (411b) des Kernpakets (411) anliegt,
wobei ein zweites Ende der Wasserkühleinheit (440) als Wicklungskontaktfläche dient und abgerundet oder gekrümmt ausgestaltet ist,
wobei jede Drosselspule (410) mindestens eine weitere Wasserkühleinheit aufweist, welche ein erstes gerades Ende und ein zweites gekrümmtes oder abgerundetes Ende als Wicklungskontaktfläche aufweist, wobei diese Wasserkühleinheit zwischen zwei Wickelabschnitten angeordnet ist, und
einer maschinenseitigen Drossel nach Anspruch 7 in einer zweiten Position, wobei sich die zweite Position oberhalb der ersten Position befindet.
